# EUROPEAN PATENT APPLICATION

(11) **EP 4 699 905 A1**
(43) Date of publication of application: **25.02.2026**
(21) Application number: 24791839.4
(22) Date of filing: 29.03.2024
(51) Int. Cl.: B62D 25/08

(54) **VEHICLE**

(30) Priority: 18.04.2023 CN 202310459061
(71) Applicant: BYD Company Limited, Shenzhen, Guangdong 518118 (CN)
(72) Inventor: YAN, Junfei, Shenzhen, Guangdong 518118 (CN); LIU, Tengyong, Shenzhen, Guangdong 518118 (CN); LIANG, Darong, Shenzhen, Guangdong 518118 (CN); YANG, Yanbing, Shenzhen, Guangdong 518118 (CN); CHEN, Yusheng, Shenzhen, Guangdong 518118 (CN)
(74) Representative: Aldridge, Henry Alexander
(86) International application number: PCT/CN2024/084798
(87) International publication number: WO 2024/217253

(57) **Abstract**

A vehicle, comprising a rear longitudinal beam assembly (410); and a rear wheel cover (451) and rear wheel cover supporting rods, the rear wheel cover (451) being connected to the rear longitudinal beam assembly (410), the rear wheel cover supporting rods comprising a rear wheel cover rear supporting rod (452) and a rear wheel cover front supporting rod I (43l), the rear wheel cover (451) being connected to the rear longitudinal beam assembly (410) by means of the rear wheel cover rear supporting rod (452), and the rear wheel cover (451) being connected to a passenger compartment (20) by means of the rear wheel cover front supporting rod I (431). Therefore, the layered design of force transmission paths by the rear longitudinal beam assembly (410), the rear wheel cover (451) and the rear wheel cover supporting rods improves the collision strength of vehicles.

## Description

### CROSS REFERENCE TO RELATED APPLICATIONS

This application claims priority to Chinese Patent Application No. "202310459061.3", filed on April 18, 2023 by BYD Company Limited and entitled "VEHICLE", which is incorporated herein by reference in its entirety.

### TECHNICAL FIELD

This application relates to the field of vehicle technologies, and in particular, to a vehicle.

### BACKGROUND

In the conventional technology, a vehicle body structure of a sports car is generally in a conventional metal form. Because a size of the vehicle body structure is greatly reduced, a structure size of a rear part of the vehicle body is reduced, collision strength of the vehicle body structure is reduced, and driving safety of the sports car is affected.

### SUMMARY

This application is intended to resolve at least one of technical problems in the related technology to some extent.

Therefore, this application provides a vehicle.

The vehicle according to embodiments of this application includes: a rear longitudinal beam assembly; a rear wheel cover, where the rear wheel cover is connected to the rear longitudinal beam assembly; a rear wheel cover supporting rod, where the rear wheel cover supporting rod includes a rear wheel cover rear supporting rod and a rear wheel cover front supporting rod I, the rear wheel cover is connected to the rear longitudinal beam assembly by using the rear wheel cover rear supporting rod, and the rear wheel cover is connected to a passenger compartment by using the rear wheel cover front supporting rod I.

In this way, a layered design, of a force transmission path, implemented by using the rear longitudinal beam assembly, the rear wheel cover, and the rear wheel cover supporting rod improves collision strength of the vehicle.

Some of additional aspects and advantages of this application are provided in the following descriptions, and some of the additional aspects and the advantages become apparent from the following descriptions or are learned from practice of this application.

### BRIEF DESCRIPTION OF DRAWINGS

FIG. 1 is a side view of a vehicle according to an embodiment of this application;
FIG. 2 is a three-dimensional view of a vehicle according to an embodiment of this application;
FIG. 3 is a schematic diagram of force transmission of a first force transmission structure of a vehicle according to an embodiment of this application;
FIG. 4 is a partial schematic diagram 1 of a vehicle according to an embodiment of this application;
FIG. 5 is a partial schematic diagram 2 of a vehicle according to an embodiment of this application;
FIG. 6 is a partial schematic diagram 3 of a vehicle according to an embodiment of this application;
FIG. 7 is a schematic diagram 1 of a single side of a vehicle according to an embodiment of this application;
FIG. 8 is a schematic diagram 2 of a single side of a vehicle according to an embodiment of this application;
FIG. 9 is a partial schematic diagram 4 of a vehicle according to an embodiment of this application;
FIG. 10 is a partial schematic diagram 5 of a vehicle according to an embodiment of this application;
FIG. 11 is a schematic diagram 1 of force transmission of a second force transmission structure of a vehicle according to an embodiment of this application;
FIG. 12 is a partial exploded view of a vehicle according to an embodiment of this application;
FIG. 13 is a schematic diagram of a rear wheel cover of a vehicle according to an embodiment of this application;
FIG. 14 is a schematic diagram 2 of force transmission of a second force transmission structure of a vehicle according to an embodiment of this application;
FIG. 15 is a schematic diagram of a rear frame stabilizer bar assembly of a vehicle according to an embodiment of this application;
FIG. 16 is an exploded view of a rear frame stabilizer bar assembly of a vehicle according to an embodiment of this application;
FIG. 17 is a schematic diagram of force transmission of a triangular frame of a vehicle according to an embodiment of this application;
FIG. 18 is a schematic diagram of a triangular frame of a vehicle according to an embodiment of this application;
FIG. 19 is an exploded view of a triangular frame of a vehicle according to an embodiment of this application; and
FIG. 20 is a partial schematic diagram 6 of a vehicle according to an embodiment of this application.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The embodiments described below with reference to the drawings are examples and aim to explain this application and cannot be construed as limiting this application.

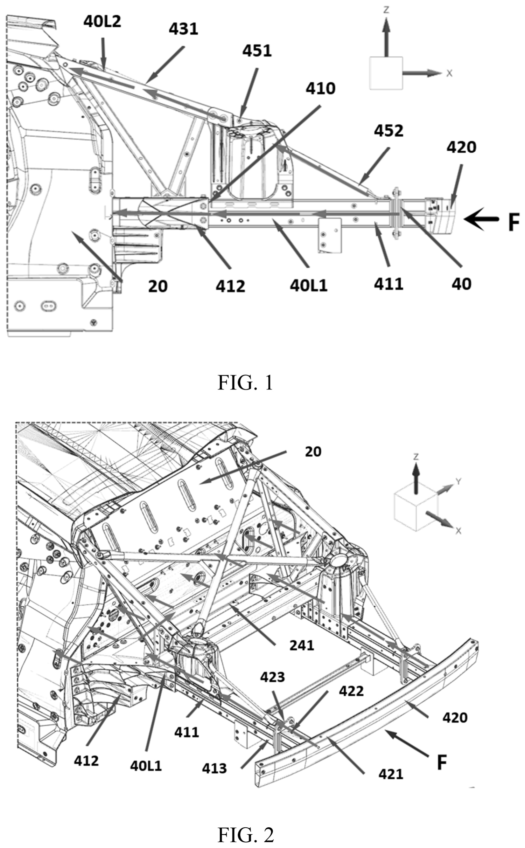

Referring to FIG. 1 and FIG. 2, the embodiments of this application provide a vehicle, and the vehicle includes: a rear longitudinal beam assembly 410, a rear wheel cover 451, and a rear wheel cover supporting rod. The rear wheel cover 451 is connected to the rear longitudinal beam assembly 410, the rear wheel cover supporting rod includes a rear wheel cover rear supporting rod 452 and a rear wheel cover front supporting rod I 431, the rear wheel cover 451 is connected to the rear longitudinal beam assembly 410 by using the rear wheel cover rear supporting rod 452, and the rear wheel cover 451 is connected to a passenger compartment 20 by using the rear wheel cover front supporting rod I 431.

A top end of the rear wheel cover 451 may be connected to a rear end of the rear longitudinal beam assembly 410 by using the rear wheel cover rear supporting rod 452, and the top end of the rear wheel cover 451 is connected to the passenger compartment 20 by using the rear wheel cover front supporting rod I 431, so that the rear longitudinal beam assembly 410 forms a first force transmission structure, and the rear wheel cover supporting rod and the rear wheel cover 451 fit to form a second force transmission structure.

The vehicle has a length direction, a width direction, and a height direction. The length direction of the vehicle may be an X direction in the figure, the width direction of the vehicle may be a Y direction in the figure, and the height direction of the vehicle may be a Z direction in the figure.

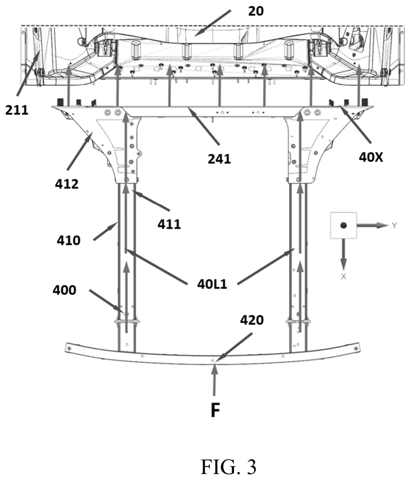

Referring to FIG. 1 and FIG. 3, the rear longitudinal beam assembly 410 may include a rear longitudinal beam 411 and a rear longitudinal beam front section 412. The first force transmission structure may be a lower-layer force transmission path 40L1. On the lower-layer force transmission path 40L1, transmission is specifically from the rear longitudinal beam 411 and the rear longitudinal beam front section 412 to a back panel lower cross beam 241, and the lower-layer force transmission path 40L1 may serve as a main path of force transmission. The second force transmission structure may be an upper-layer force transmission path 40L2. The upper-layer force transmission path 40L2 specifically includes the rear wheel cover front supporting rod 1431, the rear wheel cover 451, and the rear wheel cover rear supporting rod 452.

In a rear frame 40, a layered design of a force transmission path is implemented by arranging a rear bolted joint 452B of the rear wheel cover rear supporting rod at a rear end of the rear longitudinal beam 411. On the lower-layer force transmission path 40L1, a collision force is transmitted to the rear longitudinal beam front section 412 through the rear longitudinal beam 411. Rear longitudinal beam front sections on left and right sides are connected to the back panel lower cross beam 241, thereby improving collision strength of the vehicle.

The rear longitudinal beam 411 and the rear longitudinal beam front section 412 indicate a left rear longitudinal beam and a left rear longitudinal beam front section that are on a left side of a vehicle body structure. Because the vehicle body structure is left-right symmetrical, a right rear longitudinal beam and a right rear longitudinal beam front section that are symmetrical with the left rear longitudinal beam and the left rear longitudinal beam front section exist on a right side of the vehicle body structure. In addition, on the basis that the vehicle body structure is symmetrical as shown in the accompanying drawings of this application, a component whose left and right are not distinguished but that has a left-right symmetric structure in this specification still fall within the protection scope of this application.

In addition, the vehicle includes a rear bumper beam assembly 420, and the rear bumper beam assembly 420 is connected to the passenger compartment 20 by using the rear longitudinal beam assembly 410. When a rear part of the vehicle is subject to a collision, the rear bumper beam assembly 420 may first withstand an impact force of the collision, and transmit the impact force.

The rear longitudinal beam assembly 410 forms the first force transmission structure at a front end of the rear bumper beam assembly 420, and the rear wheel cover supporting rod and the rear wheel cover 451 fit to form the second force transmission structure at the front end of the rear bumper beam assembly 420.

The rear bumper beam assembly 420 may include a rear bumper beam 421 and a rear crash box 422. Referring to FIG. 1 to FIG. 3, when the rear part of the vehicle is subjected to a collision force F for obstacle avoidance, the rear bumper beam assembly 420 first receives the collision force for obstacle avoidance. In an XY plane, the rear bumper beam 421 transmits a force value to the rear crash boxes 422 on the left and right sides, and then to the rear longitudinal beam 411 and the rear longitudinal beam front section 412 in the first force transmission structure sequentially through a rear bumper beam connecting plate 423 and a rear longitudinal beam closing plate 413.

In addition, in the second force transmission structure, the rear wheel cover rear supporting rod 452 of the upper-layer force transmission path 40L2 is connected to a rear end position of the rear longitudinal beam 411 by using the rear bolted joint 452B of the rear wheel cover rear supporting rod. Specifically, a nut is provided on a Z-direction top surface of the rear longitudinal beam 411, and a through hole is provided on the rear wheel cover rear supporting rod 452. The rear wheel cover rear supporting rod 452 is connected to the rear longitudinal beam 411 through fastening by using a Z-direction bolt, so that the rear wheel cover rear supporting rod 452 and the rear longitudinal beam 411 are bolted. Alternatively, the rear wheel cover rear supporting rod 452 may be connected to the rear longitudinal beam 411 in a connection manner such as welding, adhesive coating, FDS (flow drill screwing), or SPR (self-piercing riveting). A collision force in the rear longitudinal beam assembly 410 is partially transmitted to the rear wheel cover rear supporting rod 452, the rear wheel cover 451, and the rear wheel cover front supporting rod I 431 through a connection point between the rear wheel cover rear supporting rod 452 and the rear longitudinal beam 411. In this way, the upper-layer force transmission path is formed.

The vehicle provided in the embodiments of this application includes the rear longitudinal beam assembly 410, the rear wheel cover 451, and the rear wheel cover supporting rod. The rear wheel cover 451 is connected to the rear longitudinal beam assembly 410, the rear wheel cover supporting rod includes the rear wheel cover rear supporting rod 452 and the rear wheel cover front supporting rod I 431, the rear wheel cover 451 is connected to the rear longitudinal beam assembly 410 by using the rear wheel cover rear supporting rod 452, and the rear wheel cover 451 is connected to the passenger compartment 20 by using the rear wheel cover front supporting rod I 431. The layered design, of the force transmission path, implemented by the rear longitudinal beam assembly, the rear wheel cover, and the rear wheel cover supporting rod improves the collision strength of the vehicle.

The rear longitudinal beam assembly 410 and at least a portion of the rear wheel cover supporting rod are misaligned in the height direction of the vehicle.

Referring to FIG. 1, in the height direction of the vehicle, the rear wheel cover supporting rod is higher than the rear longitudinal beam assembly 410. In this case, when a middle part of the vehicle is subject to a rear collision, the rear longitudinal beam assembly 410 may buffer an impact force transmitted from the middle part forward to the passenger compartment; and when an upper part of the vehicle is subject to a rear collision, the rear wheel cover supporting rod may buffer an impact force transmitted from the upper part forward to the passenger compartment. In addition, upper-lower fitting between the rear longitudinal beam assembly 410 and the rear wheel cover supporting rod may disperse impact when the rear part of the vehicle is subject to a collision, to ensure structural integrity of the passenger compartment.

Referring to FIG. 2 and FIG. 3, the passenger compartment 20 includes the back panel lower cross beam 241, and the rear longitudinal beam assembly 410 includes the left rear longitudinal beam and the right rear longitudinal beam assembly. The rear bumper beam assembly 420 is connected to the back panel lower cross beam 241 by using the left rear longitudinal beam and the right rear longitudinal beam, and the rear bumper beam assembly 420, the left rear longitudinal beam, the right rear longitudinal beam, and the back panel lower cross beam 241 form a square-shaped frame 400.

The rear bumper beam assembly 420, the rear longitudinal beam assembly 410, and the back panel lower cross beam 241 form the square-shaped frame 400. A front end of the square-shaped frame 400 is similar to a π-shaped structure. To be specific, the left rear longitudinal beam and the right rear longitudinal beam pushes the back panel lower cross beam 241 to transmit a force.

On the lower-layer force transmission path 40L1, the collision force is transmitted to a lower part of the passenger compartment 20 by using the rear longitudinal beam front sections on the left and right sides. Addition of the back panel lower cross beam 241 increases a contact area between the square-shaped frame 400 and the passenger compartment 20, so that the collision force can be dispersed and then transmitted to the passenger compartment 20 more effectively. A force value is transmitted and directed to a passenger compartment main frame by using sills 211 on the left and right sides at the lower part of the passenger compartment 20, thereby improving structure strength of the vehicle.

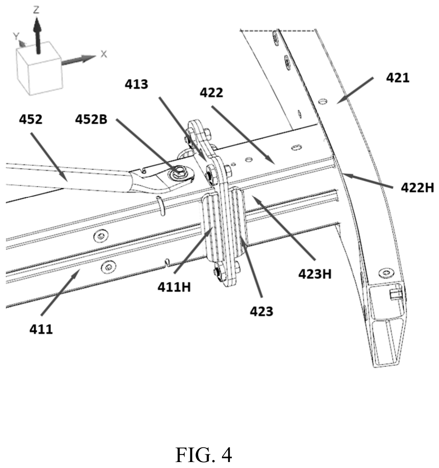

Referring to FIG. 4, the rear bumper beam assembly 420 includes the rear bumper beam 421 and the rear crash box 422. A rear end of the rear crash box 422 is welded to the rear bumper beam 421, and a front end of the rear crash box 422 is welded to the bumper beam connecting plate 423.

The rear longitudinal beam assembly 410 includes the rear longitudinal beam 411 and the rear longitudinal beam front section 412, a front end of the rear longitudinal beam 411 is connected to the rear longitudinal beam front section 412, and a rear end of the rear longitudinal beam 411 is welded to the rear longitudinal beam closing plate 413.

The bumper beam connecting plate 423 is threadedly connected to the rear longitudinal beam closing plate 413.

The rear bumper beam 421 is connected to the rear crash box 422 at a welding position 422H, the rear crash box 422 is connected to the rear bumper beam connecting plate 423 at a welding position 423H, the rear bumper beam connecting plate 423 is connected to the rear longitudinal beam closing plate 413 by using four bolts, and the rear longitudinal beam closing plate 413 is connected to the rear longitudinal beam 411 at a welding position 411H. In this way, a complete force transmission path of the first force transmission structure is formed to ensure force transmission stability of the vehicle.

In an embodiment, the rear wheel cover rear supporting rod 452 is an aluminum extrusion profile, and an end portion of the rear wheel cover rear supporting rod 452 is flattened, to facilitate connection to the rear end of the rear longitudinal beam 411 by using a rear bolted joint 452B.

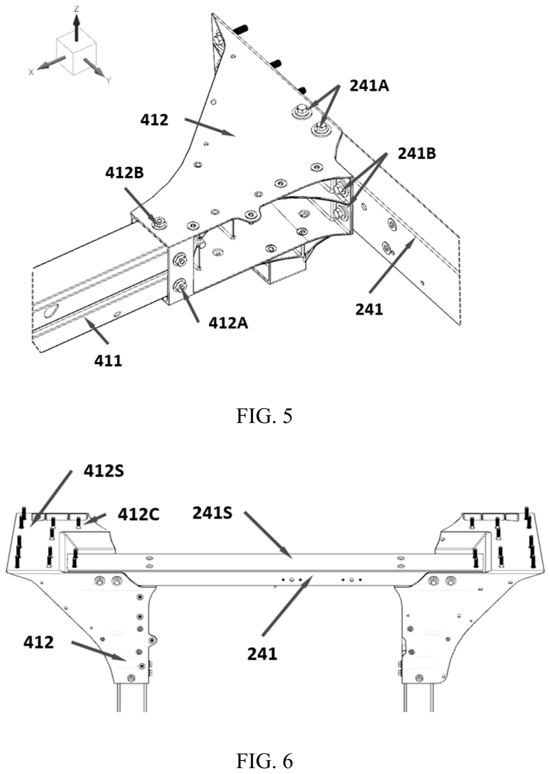

Referring to FIG. 5, an end that is of the rear longitudinal beam front section 412 and that faces the rear longitudinal beam 411 has a square-shaped nested structure, and the front end of the rear longitudinal beam 411 is embedded in the square-shaped nested structure and is threadedly connected to the rear longitudinal beam front section 412.

The rear longitudinal beam 411 and the rear longitudinal beam front section 412 may overlap by 30 mm to 60 mm by using the square-shaped nested structure. Two M10 bolts are arranged on each of left and right vertical surfaces of the square-shaped nested structure, and one M10 bolt is arranged on each of upper and lower surfaces of the square-shaped nested structure to connect the rear longitudinal beam 411 and the rear longitudinal beam front section 412. In addition, the rear longitudinal beam 411 may alternatively connected to the rear longitudinal beam front section 412 through welding, a combination of bolting and adhesive injection, or a combination of FDS and adhesive injection, all of which can ensure connection strength and stability between the rear longitudinal beam 411 and the rear longitudinal beam front section 412.

Referring to FIG. 5, the rear longitudinal beam front section 412 may be connected to the back panel lower cross beam 241 through a combination of bolting and adhesive coating, welding, or a combination of bolting, FDS, and adhesive coating.

Referring to FIG. 6, the π-shaped structure feature at the front end of the square-shaped frame 400 is connected to the passenger compartment 20 through adhesive coating by using a rear longitudinal beam front section connecting surface 412S and a back panel lower cross beam front connecting surface 241S. In addition, a rear longitudinal beam front section connection bolt 412C is arranged to strengthen connection between the square-shaped frame 400 and a structure of the left and right sills 211 of the passenger compartment 20.

In a transmission process from the lower-layer force transmission path 40L1 and the upper-layer force transmission path 40L2 to the passenger compartment 20, the upper-layer force transmission path 40L2 transmits, through the rear wheel cover front supporting rod I431, a collision force value obtained from the rear longitudinal beam 411 to an upper part of the passenger compartment 20 by using the rear wheel cover rear supporting rod 452, the rear wheel cover 451, and the rear wheel cover front supporting rod 1431.

As described above, fitting between the upper-layer force transmission path 40L2 and the passenger compartment 20 enables the entire vehicle to have relatively high stability, thereby improving collision force transmission and increasing torsional rigidity of the entire vehicle.

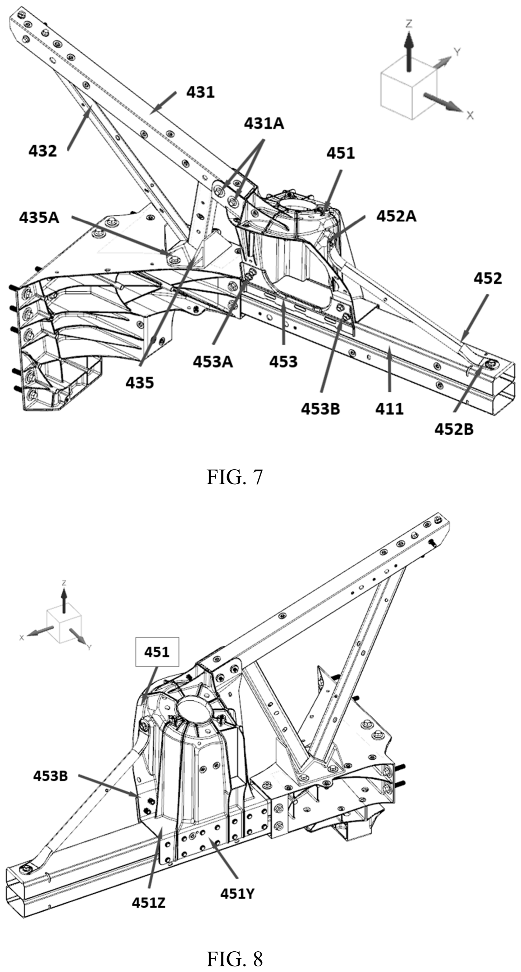

Referring to FIG. 8, the rear wheel cover 451 has a first lap surface 451Z and a second lap surface 451Y.

The first lap surface 451Z is connected to a top surface of the rear longitudinal beam 411, and the second lap surface 451Y is connected to an inner side surface of the rear longitudinal beam 411. The first lap surface 451Z and the second lap surface 451Y form a semi-enveloping lap structure of the rear wheel cover 451.

The rear wheel cover 451 is connected to the rear longitudinal beam 411 through adhesive coating, welding, or bolting by using the first lap surface 451Z that is of the rear wheel cover 451 and that is perpendicular to a Z direction; and then is connected to the rear longitudinal beam 411 through a combination of adhesive coating and FDS, welding, or bolting by using the second lap surface 451Y perpendicular to a Y direction. Finally, connection strength between the rear wheel cover 451 and the rear longitudinal beam is increased by using a rear wheel cover connecting plate 453 shown in FIG. 7. The rear wheel cover connecting plate 453 may be a stamped plate of a U-shaped structure. Connection points 453A and 453B on the rear wheel cover connecting plate 453 connect the rear wheel cover connecting plate 453 and the rear wheel cover 451, and the rear wheel cover connecting plate 453 is connected to the rear longitudinal beam 411 through welding, bolting, FDS, or adhesive coating by using a plug welding hole and a welding incision that are of the rear wheel cover connecting plate 453, to increase connection stability between the rear cover wheel 451 and the rear longitudinal beam assembly 410.

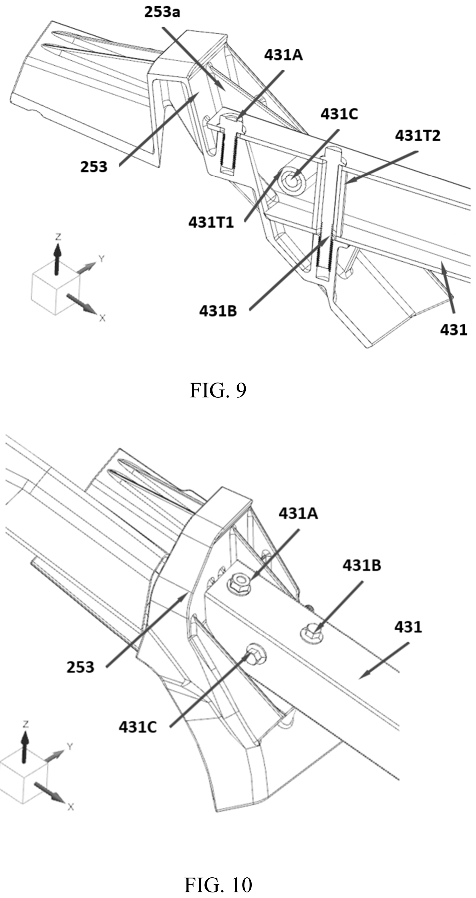

Referring to FIG. 9 and FIG. 10, the vehicle further includes a roof frame reinforcement longitudinal beam rear connection casting 253, and a first connection structure, a second connection structure, and a flanged edge 253a are disposed on the roof frame reinforcement longitudinal beam rear connection casting 253.

In the height direction of the vehicle, the rear wheel cover front supporting rod I 431 is respectively connected to the first connection structure and the second connection structure by using a first bolt 431A and a second bolt 431B.

In the width direction of the vehicle, the rear wheel cover front supporting rod I 431 is connected to the flanged edge 253a by using a third bolt 431C.

As shown in FIG. 9, a front end of the rear wheel cover front supporting rod I 431 is connected to the roof frame reinforcement longitudinal beam rear connection casting 253 by using three bolts, so that the upper end of the rear frame 40 is connected to the passenger compartment 20.

The front end of the rear wheel cover front supporting rod I 431 is designed with a bevel, so that a top surface of the rear wheel cover front supporting rod I 431 can be directly attached to the first connection structure designed on the roof frame reinforcement longitudinal beam rear connection casting 253 and is bolted by using the first bolt 431A. At a position that is 30 mm to 60 mm behind the first bolt 431A, one Y-direction bolt sleeve 431T1 is designed on each of a left side and a right side of the rear wheel cover front supporting rod I 431. Left and right vertical surfaces of the rear wheel cover front supporting rod I 431 are connected to the flanged edge 253a that is of the roof frame reinforcement longitudinal beam rear connection casting 253 and that is perpendicular to the Y direction, through fitting between the third bolt 431C and the bolt sleeve 431T1. At a position that is 30 mm to 60 mm behind the third bolt 431C, a bolt sleeve 431T2 perpendicular to the top surface of the rear wheel cover front supporting rod I 431 is designed. The second bolt 431B passes through the bolt sleeve 431T2, and then is connected to the second connection structure. The top surface and a bottom surface of the rear wheel cover front supporting rod I 431 are bolted to a second connection structure surface of the roof frame reinforcement longitudinal beam rear connection casting 253.

In this case, the rear wheel cover front supporting rod I 431 is bolted to the roof frame reinforcement longitudinal beam rear connection casting 253 by using the first bolt 431A and the second bolt 431B that are in the Z direction, and the third bolt 431C in the Y direction, which may prevent wobbling of rear wheel cover front supporting rod I 431 in the X direction, the Y direction, and the Z direction, improve connection stability between the rear frame 40 and the passenger compartment 20, and further increase the torsional rigidity of the entire vehicle.

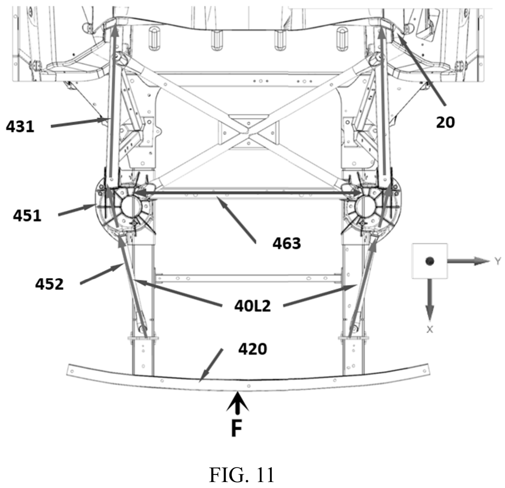

Referring to FIG. 11, the vehicle further includes a rear wheel cover stabilizer bar 463. The rear wheel cover 451 includes a left rear wheel cover and a right rear wheel cover, and the rear wheel cover stabilizer bar 463 is connected between the left rear wheel cover and the right rear wheel cover.

As shown in FIG. 11, the upper-layer force transmission path 40L2 of the rear frame 40 forms an inverted-V structure, and a size of the upper-layer force transmission path 40L2 in the Y direction changes to a front-wide rear-narrow form. An upper end of the rear wheel cover 451 is located at an intermediate segment of the upper-layer force transmission path 40L2 on a single side, and the rear wheel cover rear supporting rod 452 and the rear wheel cover front supporting rod I 431 are respectively connected before and behind the upper end of the rear wheel cover 451.

Because there is a height difference between the upper-layer force transmission path 40L2 and the lower-layer force transmission path 40L1 in the Z direction, there is also a distance between left and right paths of the upper-layer force transmission path in the Y direction. In this case, the left rear wheel cover and the right rear wheel cover are connected by using the rear wheel cover stabilizer bar 463 arranged on the upper end of the rear wheel cover in the Y direction. In this way, force transmission path structures on two sides of the upper-layer force transmission path 40L2 are connected to form an H-shaped structure, to increase structural stability of rear wheel covers 451 in the Y direction, provide a tensile force in the Y direction for the force transmission paths on two sides of the upper-layer force transmission path 40L2, and increase stability of a force value transmission path structure.

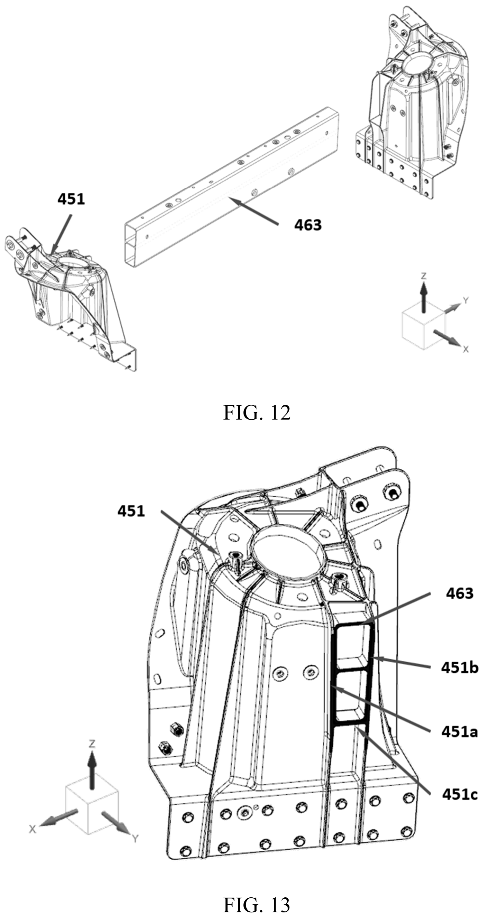

In addition, referring to FIG. 12 and FIG. 13, the rear wheel cover stabilizer bar 463 may be a cross beam with a horizontally tripartite rectangle-shaped, square-shaped, or 2x2 grid-shaped cross section. The rear wheel covers on the left and right sides are provided with a corresponding U-shaped groove structure, and match the rear wheel cover stabilizer bar 463 by using the U-shaped groove structure. Specifically, when the rear wheel cover stabilizer bar 463 is lapped with the rear wheel covers on the left and right sides, the rear wheel cover stabilizer bar 463 is connected to the left rear wheel cover and the right rear wheel cover by designing a welding structure, a bolting structure, or an FDS structure on lap surfaces 451a, 451b, and 451c of the rear wheel cover 451.

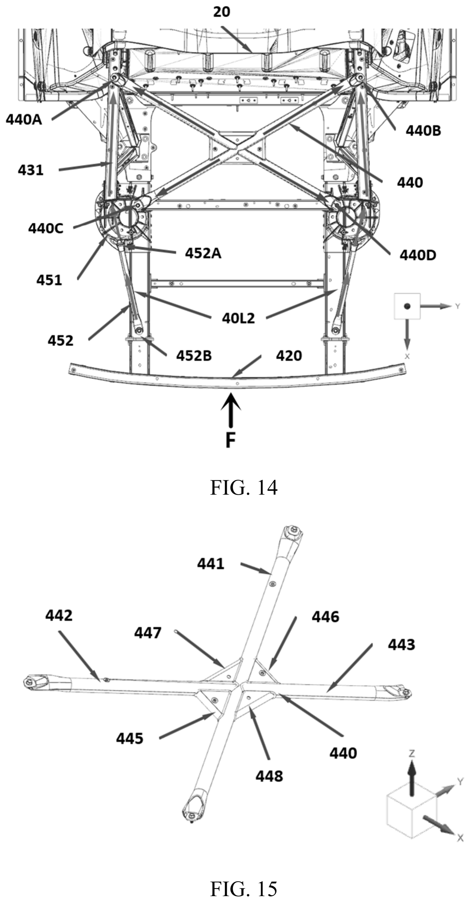

Referring to FIG. 14 and FIG. 15, the vehicle further includes a rear frame stabilizer bar assembly 440. The rear frame stabilizer bar assembly 440 includes a rear frame stabilizer bar I 441, a rear frame stabilizer bar II 442, and a rear frame stabilizer bar III 443. The rear frame stabilizer bar II 442 and the rear frame stabilizer bar III 443 are respectively connected to two sides of the rear frame stabilizer bar I 441, to form an X-shaped structure by using the rear frame stabilizer bar I 441, the rear frame stabilizer bar II 442, and the rear frame stabilizer bar III 443.

The rear wheel cover front supporting rod I 431 includes a left rear wheel cover front supporting rod I and a right rear wheel cover front supporting rod I, a front end of the X-shaped structure is separately connected to the left rear wheel cover front supporting rod I and the right rear wheel cover front supporting rod I, and a rear end of the X-shaped structure is separately connected to the left rear wheel cover and the right rear wheel cover.

The rear frame stabilizer bar assembly 440 of the X-shaped frame structure is used at a front end of the upper-layer force transmission path 40L2 of the rear frame 40, to improve stability of the upper-layer force transmission path 40L2.

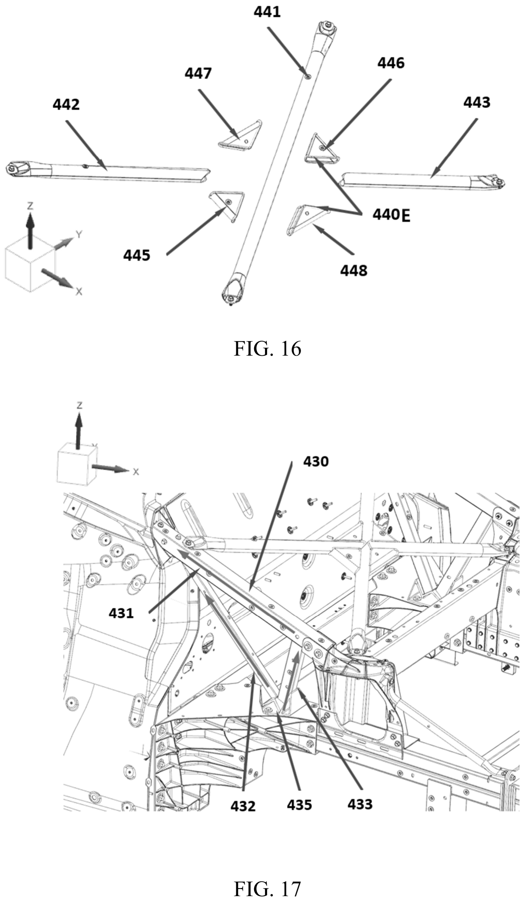

As shown in FIG. 14 and FIG. 16, the rear frame stabilizer bar assembly 440 includes four triangular U-shaped cross-section closing plates, specifically including a left closing plate 445, a right closing plate 446, a front closing plate 447, and a rear closing plate 448. The left closing plate 445, the right closing plate 446, the front closing plate 447, and the rear closing plate 448 are pieced together, by using a fixture, in an included angle region formed by the rear frame stabilizer bar I 441, the rear frame stabilizer bar II 442, and the rear frame stabilizer bar III 443, and are welded to the rear frame stabilizer bar I 441, the rear frame stabilizer bar II 442, and the rear frame stabilizer bar III 443 at a welding position 440E, thereby improving structural stability of the rear frame stabilizer bar assembly 440.

In addition, a width of the front end of the X-shaped structure is greater than a width of the rear end of the X-shaped structure. The rear frame stabilizer bar assembly 440 is connected to the rear frame by designing four mounting points at top ends of three slant bars. Referring to FIG. 15, front two mounting points 440A and 440B are correspondingly arranged at foremost ends of the rear wheel cover front supporting rods I 431 on the left and right sides in the upper-layer force transmission path, and rear two mounting points 440C and 440D are correspondingly arranged at the upper ends of the rear wheel covers 451 on the left and right sides and are close to the rear wheel cover stabilizer bar 463. In this way, a multi-triangle structure is formed when the width of the front end of the X-shaped structure is greater than the width of the rear end of the X-shaped structure, which provides a more secure force transmission frame structure for the rear frame 40, thereby improving torsional performance of the entire vehicle.

Referring to FIG. 17 to FIG. 19, the rear wheel cover supporting rod further includes a rear wheel cover front supporting rod II 432 and a rear wheel cover front supporting rod III 433, upper ends of the rear wheel cover front supporting rod II 432 and the rear wheel cover front supporting rod III 433 are respectively connected to two ends of the rear wheel cover front supporting rod I 431, and lower ends of the rear wheel cover front supporting rod II 432 and the rear wheel cover front supporting rod III 433 are connected to the rear longitudinal beam assembly 410 by using a rear wheel cover front supporting rod connecting support 435. In this way, the rear wheel cover front supporting rod I 431, the rear wheel cover front supporting rod II 432, and the rear wheel cover front supporting rod III 433 form a triangular frame 430.

One triangular frame 430 is designed at each of front ends on left and right sides of the rear frame 40. A front end of an upper-layer force transmission path structure is connected to a front end of a lower-layer force transmission path structure by using the triangular frame 430, to improve force transmission integrity of the vehicle.

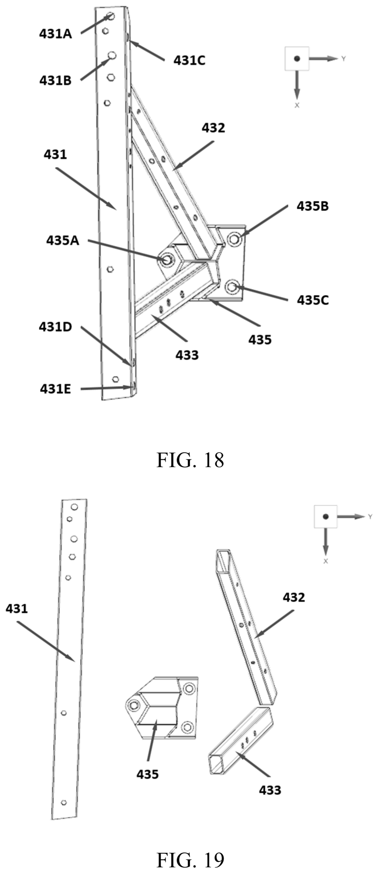

As shown in FIG. 18 and FIG. 19, the rear wheel cover front supporting rod connecting support 435 is designed at a lower end of the triangular frame 430, and is connected to lower ends of the rear wheel cover front supporting rod II and the rear wheel cover front supporting rod III through welding, and then is connected to the rear longitudinal beam front section 412 by using the bolted joints 435A, 435B, and 435C on the rear wheel cover front supporting rod connecting support 435 through bolting, adhesive coating, or FDS. Upper end portions of the rear wheel cover front supporting rod II and rear wheel cover front supporting rod III and the rear wheel cover front supporting rod I 431 are directly pieced and then are connected through welding. When the front end of the upper-layer force transmission path structure is connected to the front end of the lower-layer force transmission path structure by using the triangular frame 430, wobbling stability of the rear frame in the Z direction can be significantly provided.

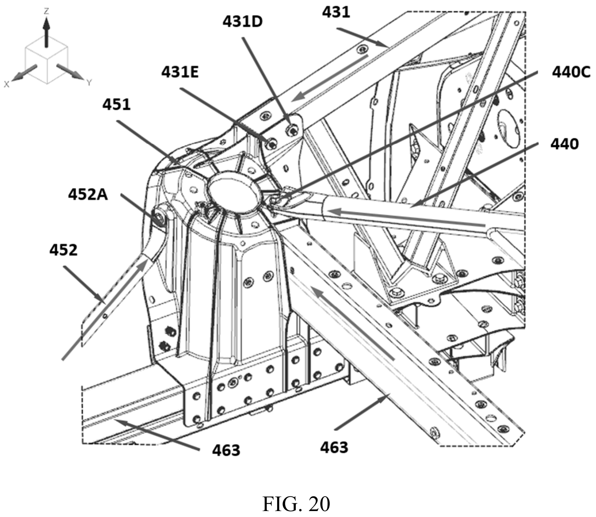

Referring to FIG. 19 and FIG. 20, a front end of the rear wheel cover rear supporting rod 452 is connected to the rear wheel cover 451 by using a front bolted joint 452A, and a rear end of the rear wheel cover rear supporting rod 452 is connected to a rear end of the rear longitudinal beam 411 by using a rear bolted joint 452B. The rear wheel cover 451 and the rear wheel cover front supporting rod I 431 are fastened and bolted by matching two sides by using the U-shaped groove on the rear wheel cover 451, and two bolted joints 431D and 431E in the Y direction are provided on the rear wheel cover front supporting rod I 431. The rear wheel cover front supporting rod I 431 is pieces with the rear wheel cover front supporting rod II 432 through welding. Specifically, when the lower end of the rear wheel cover front supporting rod II 432 is connected to the rear wheel cover front supporting rod connecting support 435 through welding, the rear wheel cover front supporting rod connecting support 435 is connected to the rear longitudinal beam by using bolted joints 435A, 435B, and 435C.

As shown in FIG. 20, the rear wheel cover front supporting rod I 431 and the rear wheel cover rear supporting rod 452 provide stable support in the X direction for the rear wheel cover 451 provided in the embodiments of this application provides. Specifically, the rear wheel cover 451 is connected to the rear wheel cover front supporting rod I 431 and the rear wheel cover rear supporting rod 452 by using bolted joints 452A, 431E, and 431D. In addition, the rear wheel cover stabilizer bar 463 and the rear frame stabilizer bar assembly 440 provide stable support in the Y direction. Specifically, the rear wheel cover stabilizer bar 463 is connected to the rear wheel covers 451 on the left and right sides through welding, and the rear frame stabilizer bar assembly 440 is connected to the rear wheel cover 451 by using the bolted joint 440C.

Because a rear shock absorber is arranged and designed obliquely upward and is inclined toward the inside of the vehicle in the Z direction, both the rear wheel cover stabilizer bar 463 and the rear frame stabilizer bar assembly 440 provide stable support in the Z direction; and because a support structure with multi-directional supporting rods is used for the rear wheel cover 451, dynamic stiffness at mounting points of the rear shock absorber in all directions can be improved.

In addition, in the vehicle provided in the embodiments of this application, each connection component may be an aluminum alloy profile, an aluminum casting, or an aluminum stamping, or may be formed by using a material such as a steel, a magnesium alloy, or a carbon fiber.

In this application, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "on", "above", and "over" the second feature may be that the first feature is directly above or obliquely above the second feature, or merely indicates that a horizontal height of the first feature is higher than that of the second feature. That the first feature is "under", "below", and "beneath" the second feature may be that the first feature is directly below or obliquely below the second feature, or merely indicates that a horizontal height of the first feature is less than that of the second feature.

In descriptions of this specification, reference to descriptions of the terms such as "one embodiment", "some embodiments", "example", "specific example", or "some examples" means that specific features, structures, materials, or characteristics described with reference to the embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner. In addition, when there is no contradiction, a person skilled in the art may incorporate and combine different embodiments or examples described in this specification and features of different embodiments or examples.

Although embodiments of this application are shown and described above, it may be understood that the foregoing embodiments are exemplary and should not be understood as a limitation on this application, and changes, modifications, replacements, and variations may be made by a person of ordinary skill in the art to the foregoing embodiments within the scope of this application.

## Claims

1. A vehicle, comprising:
a rear longitudinal beam assembly;
a rear wheel cover, wherein the rear wheel cover is connected to the rear longitudinal beam assembly; and
a rear wheel cover supporting rod, wherein the rear wheel cover supporting rod comprises a rear wheel cover rear supporting rod and a rear wheel cover front supporting rod I, the rear wheel cover is connected to the rear longitudinal beam assembly by using the rear wheel cover rear supporting rod, and the rear wheel cover is connected to a passenger compartment by using the rear wheel cover front supporting rod I.

2. The vehicle according to claim 1, wherein the rear longitudinal beam assembly and at least a portion of the rear wheel cover supporting rod are misaligned in a height direction of the vehicle.

3. The vehicle according to claim 1 or 2, wherein the passenger compartment comprises a back panel lower cross beam, the rear longitudinal beam assembly comprises a left rear longitudinal beam and a right rear longitudinal beam assembly, a rear bumper beam assembly is connected to the back panel lower cross beam by using the left rear longitudinal beam and the right rear longitudinal beam, and the rear bumper beam assembly, the left rear longitudinal beam, the right rear longitudinal beam, and the back panel lower cross beam form a square-shaped frame.

4. The vehicle according to claim 3, wherein the rear bumper beam assembly comprises a rear bumper beam and a rear crash box, a rear end of the rear crash box is welded to the rear bumper beam, and a front end of the rear crash box is welded to a bumper beam connecting plate;
the rear longitudinal beam assembly comprises a rear longitudinal beam and a rear longitudinal beam front section, a front end of the rear longitudinal beam is connected to the rear longitudinal beam front section, and a rear end of the rear longitudinal beam is welded to a rear longitudinal beam closing plate; and
the bumper beam connecting plate is threadedly connected to the rear longitudinal beam closing plate.

5. The vehicle according to claim 4, wherein an end of the rear longitudinal beam front section facing the rear longitudinal beam is a square-shaped nested structure, and the front end of the rear longitudinal beam is embedded in the square-shaped nested structure and is threadedly connected to the rear longitudinal beam front section.

6. The vehicle according to any one of claims 1 to 5, wherein the rear wheel cover has a first lap surface and a second lap surface; and
the first lap surface is connected to a top surface of the rear longitudinal beam, and the second lap surface is connected to an inner side surface of the rear longitudinal beam, to form a semi-enveloping lap structure of the rear wheel cover.

7. The vehicle according to any one of claims 1 to 6, further comprising a roof frame reinforcement longitudinal beam rear connection casting, wherein a first connection structure, a second connection structure, and a flanged edge are disposed on the roof frame reinforcement longitudinal beam rear connection casting;
in the height direction of the vehicle, the rear wheel cover front supporting rod I is respectively connected to the first connection structure and the second connection structure by using a first bolt and a second bolt; and
in a width direction of the vehicle, the rear wheel cover front supporting rod I is connected to the flanged edge by using a third bolt.

8. The vehicle according to any one of claims 1 to 7, further comprising a rear wheel cover stabilizer bar, wherein the rear wheel cover comprising a left rear wheel cover and a right rear wheel cover, and the rear wheel cover stabilizer bar is connected between the left rear wheel cover and the right rear wheel cover.

9. The vehicle according to any one of claims 1 to 8, further comprising a rear frame stabilizer bar assembly, wherein the rear frame stabilizer bar assembly comprises a rear frame stabilizer bar I, a rear frame stabilizer bar II, and a rear frame stabilizer bar III, and the rear frame stabilizer bar II and the rear frame stabilizer bar III are respectively connected to two sides of the rear frame stabilizer bar I to form an X-shaped structure;
the rear wheel cover front supporting rod I comprises a left rear wheel cover front supporting rod I and a right rear wheel cover front supporting rod I, a front end of the X-shaped structure is separately connected to the left rear wheel cover front supporting rod I and the right rear wheel cover front supporting rod I, and a rear end of the X-shaped structure is separately connected to the left rear wheel cover and the right rear wheel cover; and
a width of the front end of the X-shaped structure is greater than a width of the rear end of the X-shaped structure.

10. The vehicle according to any one of claims 1 to 9, wherein the rear wheel cover supporting rod further comprises a rear wheel cover front supporting rod II and a rear wheel cover front supporting rod III, upper ends of the rear wheel cover front supporting rod II and the rear wheel cover front supporting rod III are respectively connected to two ends of the rear wheel cover front supporting rod I, and lower ends of the rear wheel cover front supporting rod II and the rear wheel cover front supporting rod III are connected to the rear longitudinal beam assembly by using a rear wheel cover front supporting rod connecting support, so that the rear wheel cover front supporting rod I, the rear wheel cover front supporting rod II and the rear wheel cover front supporting rod III form a triangular frame.
